(19) Europäisches Patentamt
European Patent Office
Office européen des brevets

(11) **EP 2 152 402 B1**

(12) **FASCICULE DE BREVET EUROPEEN**

(45) Date de publication et mention de la délivrance du brevet:
**22.05.2019   Bulletin 2019/21**

(51) Int Cl.:
*B01J 20/18* *(2006.01)*     *B01J 20/28* *(2006.01)*
*B01J 29/06* *(2006.01)*     *B01J 35/08* *(2006.01)*
*B01J 2/04* *(2006.01)*      *B01D 53/04* *(2006.01)*

(21) Numéro de dépôt: **08805908.4**

(22) Date de dépôt: **02.06.2008**

(86) Numéro de dépôt international:
**PCT/FR2008/050965**

(87) Numéro de publication internationale:
**WO 2008/152319 (18.12.2008 Gazette 2008/51)**

(54) **AGGLOMERES SPHERIQUES A BASE DE ZEOLITE(S), LEUR PROCEDE D'OBTENTION ET LEUR UTILISATION DANS LES PROCEDES D'ADSORPTION OU EN CATALYSE**

KUGELFÖRMIGE AGGLOMERATE AUF DER BASIS VON ZEOLITH(EN), VERFAHREN ZU IHRER HERSTELLUNG UND IHRE VERWENDUNG FÜR ADSORPTIONSPROZESSE ODER KATALYSATOREN

SPHERICAL AGGLOMERATES BASED ON ZEOLITE(S), PROCESS FOR THEIR PRODUCTION AND THEIR USE IN ADSORPTION PROCESSES OR IN CATALYSIS

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **04.06.2007   FR 0755452**
**12.07.2007   US 949288 P**

(43) Date de publication de la demande:
**17.02.2010   Bulletin 2010/07**

(73) Titulaire: **ARKEMA FRANCE**
**92700 Colombes (FR)**

(72) Inventeurs:
• **LUTZ, Cécile**
**F-64000 Pau (FR)**
• **SZENDROVICS, Sylvie**
**F-64370 Arthez-de-Bearn (FR)**

• **PERSILLON, Quitterie**
**F-64170 Morlaas (FR)**

(74) Mandataire: **Schaefer, Anne-Sophie et al**
**ARKEMA France**
**Département Propriété Industrielle**
**420, rue d'Estienne d'Orves**
**92705 Colombes Cedex (FR)**

(56) Documents cités:
| | |
|---|---|
| EP-A- 0 273 736 | EP-A- 0 325 487 |
| EP-A- 0 785 020 | EP-A- 0 893 157 |
| EP-A- 1 157 731 | EP-A- 1 323 468 |
| EP-B- 0 506 282 | WO-A-00/50166 |
| WO-A-01/24923 | GB-A- 1 124 524 |
| JP-A- 54 062 992 | JP-A- 2004 123 411 |
| JP-B2- 3 799 678 | US-A- 3 323 876 |
| US-A- 5 856 264 | US-A- 6 100 211 |
| US-B2- 6 524 984 | |

**Description**

[Domaine technique]

L'invention concerne des agglomérés sphériques à base de zéolite(s) et d'argile(s), de taille et de morphologie maîtrisées : taille inférieure ou égale à 600 μm, très bonne sphéricité, à haute teneur en matière zéolitique, leur procédé d'obtention ainsi que leur utilisation dans le domaine de la catalyse et dans des procédés de séparation des flux gazeux ou liquides.

L'invention concerne par ailleurs un concentrateur d'oxygène d'assistance respiratoire comprenant lesdits agglomérés.

L'utilisation de tels agglomérés est particulièrement avantageuse dans les applications où la maîtrise de la morphologie en terme de taille, d'homogénéité et/ou de sphéricité est importante, au même titre que la haute teneur en matière active (matière zéolitique), et dans les procédés qui requièrent des résistances mécaniques à l'écrasement et à l'attrition élevées et des pertes de charge maîtrisées, notamment dans les procédés d'adsorption, et plus particulièrement dans des modulés en pression, ou en catalyse.

[Technique antérieure]

En général, les zéolites synthétiques sont obtenues à l'issue d'un processus de nucléation et cristallisation de gels de silico-aluminates : la taille des cristallites anguleuses ainsi produites est de l'ordre du micromètre à quelques micromètres : on parle alors de poudres. Ces poudres sont d'un emploi industriel malaisé : difficiles à manipuler en raison de leur mauvaise coulabilité, dans les procédés dynamiques impliquant des fluides en écoulement, elles génèrent des pertes de charge importantes et une mauvaise répartition des flux dans les lits.

On préfère recourir à des formes agglomérées granulaires : ces agglomérés, qu'ils soient sous forme de plaquettes, de billes, de filés ou d'extrudés, sont couramment constitués de poudre(s) de zéolite, qui constitue(nt) la matière active, et d'un liant, le plus souvent inerte, destiné à assurer la cohésion des cristaux de zéolite(s) entre eux. On choisit en général les liants de telle sorte qu'ils confèrent aux agglomérés une résistance mécanique suffisante pour résister aux vibrations et aux mouvements auxquels ils sont soumis au cours de leurs divers emplois.

Les agglomérés sont généralement formés à partir d'un mélange pâteux de zéolite(s) et de liant et éventuellement d'un ou plusieurs additifs destinés par exemple à faciliter la manipulation de la pâte par modification de la rhéologie et/ou du pouvoir collant ou à conférer aux agglomérés finaux des propriétés satisfaisantes, notamment de porosité très importante dans les applications en adsorption.

Les procédés de mise en forme des solides sont d'une grande diversité, comme le montre l'ouvrage de référence « Size Enlargement By Agglomeration » de W. Pietsch, John Wiley and Sons, Chichester.

Dans le domaine de l'agglomération des zéolites, l'homme de l'art utilise des procédés de mise en forme par pressage, notamment par extrusion. Les agglomérés ainsi obtenus sont cylindriques et non sphériques, ce qui rend difficile le remplissage homogène des colonnes d'adsorption.

Il est possible de broyer les agglomérés cylindriques pour obtenir des particules plus fines, mais la morphologie de ces particules est alors très irrégulière et il se forme beaucoup de poussières.

Il est également courant de recourir à des procédés de mise en forme par agitation et collisions, par exemple à des tambours granulateurs, à des assiettes granulatrices, fonctionnant par exemple en continu, ou à des mélangeurs granulateurs exploités en général en discontinu, appelés parfois aussi « nodulateurs ». Le document US6100211 décrit des agglomérés zéolithiques ayant une teneur en masse seulement de 25% à 75% en poids de zéolite. Le document EP0273736 décrit des agglomérés zéolithiques préparés avec une quantité d'eau très importante, de telle sorte que leurs propriétés mécaniques ne semblent pas atteindre des valeurs suffisantes pour l'application envisagée dans la présente invention. Le document US6524984 décrit des agglomérés zéolithiques de diamètre moyen de 30 μm et dans lesquels le liant n'est pas une argile mais de la silice oligomère. Le document GB1124524 décrit un procédé de préparation de corps sphériques à partir de zéolites synthétiques mettant en oeuvre des assiettes tournantes, ce qui ne permet pas l'obtention de valeurs satisfaisantes concernant les critères d'émoussé et d'allongement. Le document JP3799678-B2 divulgue quant à lui des agglomérés de taille comprise entre 0,5 mm et 2 mm obtenus par extrusion puis polissage.

Ces techniques atteignent cependant leurs limites quand il s'agit d'obtenir des agglomérés de très petite taille, de morphologie régulière, possédant des propriétés mécaniques acceptables pour leurs utilisations dans des procédés industriels d'adsorption. En effet, la conduite des installations industrielles de granulation devient difficile, les taux de recyclage sont élevés, ce qui augmente considérablement les coûts de production, la morphologie des agglomérés est irrégulière et leurs propriétés mécaniques sont médiocres, du fait d'un temps de séjour trop faible pour permettre un compactage suffisant.

Par ailleurs, il est souvent nécessaire de sécher au moins en partie les agglomérés avant d'effectuer la sélection par tamisage des particules dans la coupe granulométrique souhaitée. On constate que les particules humides colmatent souvent les toiles de tamisage.

Une autre technique consiste à faire écouler la poudre en continu, par gravité, dans un tube vertical dans lequel est placée une turbine verticale rapide à pales d'inclinaison réglable. En amont, le liant est projeté en continu sur le flux dispersé de poudre. Les particules ainsi formées entrent en collision avec d'autres particules humides pour former de petits agglomérés. Leur granulométrie est fine, mais elles sont peu denses, informes et peu solides, ce qui est utile dans les applications où une dispersion facile et rapide des agglomérés est recherchée mais ne convient pas lorsque ces agglomérés sont utilisés dans des procédés d'adsorption, par exemple de gaz industriels.

Par ailleurs, il existe des procédés de mise en forme par dispersion sous forme de gouttes de suspension, suivie d'une phase de consolidation par gélification, polymérisation, solidification ou séchage. Les procédés sol-gel opèrent par gélification de gouttes en suspension dans un liquide non miscible. Cette technique, bien qu'efficace, est particulièrement coûteuse.

Un autre procédé consiste à emprisonner la poudre dans une membrane continue polymérisée *in situ* à l'interface d'une suspension. Les particules obtenues sont de faible taille, en général de diamètre volumique moyen (D50) inférieur à 20 μm.

Une autre méthode repose sur l'enrobage d'une poudre par un film de polymère précipité à partir d'une solution colloïdale déstabilisée de ce polymère.

Un autre procédé appelé « prilling » consiste à solidifier des gouttes en fusion par chute libre dans un courant d'air ascendant, de façon à former des perles de quelques millimètres. Leur résistance mécanique est faible. De plus, la hauteur de chute nécessaire est importante, si bien que les investissements sont coûteux.

Enfin, la technique d'atomisation effectue simultanément le séchage continu de gouttelettes pulvérisées dans une atmosphère de gaz chauds et la mise en forme du solide en suspension dans les gouttelettes. Les industries de la détergence y recourent abondamment, en atomisant des mélanges complexes contenant des tensioactifs assurant la détergence, des agents séquestrants tels que des zéolites, des sels de carbonates ou des phosphates destinés à augmenter l'efficacité des tensioactifs par adoucissement de l'eau et accroissement de l'alcalinité, des argiles de type bentonite pour faciliter la mise en suspension des salissures ou de type montmorillonite ayant des propriétés adoucissantes, des sels solubles neutres pour ajuster la densité ou promouvoir la détergence, des additifs organiques tels que les dérivés de la cellulose pour empêcher la re-déposition, les correcteurs optiques, les détachants, les enzymes, les anti-mousse ou les agents moussants, les polymères floculants, rhéofluidifiants ou dispersants.

La mise en forme des lessives ou de certains de leurs constituants sous forme de petits objets agglomérés relativement sphériques permet d'améliorer la coulabilité des poudres et de limiter leur mottage, c'est-à-dire leur agrégation durant le stockage, en particulier dans des atmosphères à humidité relative élevée. Mais la technique d'atomisation appliquée aux formulations de détergence a surtout l'avantage de fabriquer des agglomérés très peu denses, souvent creux, mécaniquement peu résistants, capables de se désintégrer très rapidement sans former de grumeaux. La masse volumique apparente de ces agglomérés est inférieure à 500 g/L.

Les documents suivants sont cités à titre d'illustration.

EP-B1-1 215 277 propose ainsi des particules supports de tensioactif à base de zéolite, de polymère(s) et de sel(s) solubles dans l'eau, capables de se désintégrer rapidement.

Pour limiter le mottage lors du stockage et améliorer la détergence, EP-A1-1 529 833 recommande de fabriquer des agglomérés, constitutifs de lessive, avec de 10% à 54% de zéolite et de 8% à 75% de polymère carboxylate et éventuellement des additifs tels que tensioactifs, rhéofluidifiants, agents chélatants, sels, argiles adoucissantes.

Il est parfois souhaitable de fabriquer une lessive plus compacte que celle obtenue par la seule technique d'atomisation, conservant cependant les propriétés obtenues avec les agglomérés très peu denses atomisés ; pour augmenter la densité, des post-traitements sont pratiqués : par exemple, WO-A1-2000/077140 et WO-A1-2000/077141 proposent d'incorporer une fraction d'agglomérés obtenus par des procédés autres que l'atomisation.

Un autre secteur industriel qui recourt fréquemment à la mise en forme par atomisation de mélanges contenant de la zéolite est celui de la catalyse. La tenue mécanique des catalyseurs, notamment leur résistance à l'attrition, est particulièrement importante, car ils sont mis en oeuvre dans des conditions extrêmement sévères, comme par exemple dans des procédés de craquage catalytique en lit fluidisé.

De façon à conférer des propriétés mécaniques convenables aux catalyseurs, il est d'usage de limiter la quantité de matière active zéolitique à moins de 60 % de l'aggloméré, comme le montrent les documents US-A-4 022 714, US-A-4 357 265, EP-A1-0 112 956 et US-A-4 826 793.

Une autre manière d'obtenir des résistances mécaniques élevées consiste à lier la zéolite avec des sols de silice ou d'alumine qui sont ensuite séchés ou gélifiés pour les durcir, voir par exemple GB-A-1 145 405, US-A-4 252 688, US-A-4 542 118 et US-A-5 164 073. Dans US-A-4 612 298 et EP-A1-0 112 956, de l'argile est introduite dans la formulation qui agit principalement pour piéger les éventuels poisons du catalyseur et augmenter ainsi l'efficacité catalytique.

Dans certains cas, les catalyseurs sont préparés à partir de billes d'argile(s) ou de mélanges d'argiles calcinés et soumis à un traitement de conversion en matériau zéolitique de façon à créer la matière active pour la catalyse et à durcir les agglomérés. On peut par exemple citer GB-A-1 256 171, US-A-5 559 067, US 2004/235642 et US-A-4 520 119. Cette technique ne permet pas d'obtenir des teneurs en zéolite très élevées car la conversion en zéolite n'est que partielle et relativement lente.

La mise en forme des agglomérés zéolitiques par atomisation est très peu utilisée dans le domaine de l'adsorption.

GB 855 301 propose une méthode de synthèse de zéolite, suivie éventuellement de la mise en forme par atomisation ; le liant utilisé pour agglomérer les cristallites de zéolite est du silicate de sodium liquide. Ce type de liant permet d'obtenir des propriétés mécaniques convenables, mais a tendance à bloquer l'accès à la porosité des agglomérés, ce qui est préjudiciable dans des procédés d'adsorption.

De même, EP-B1-0 506 282 propose des agglomérats de 40 $\mu$m à 800 $\mu$m, fabriqués par atomisation à partir de zéolite et de 10 % à 30 % de particules de silice amorphe colloïdale qui sert de liant.

Dans le but d'obtenir des tamis moléculaires possédant une bonne résistance à l'attrition et présentant une taille moyenne comprise entre 50 $\mu$m et 200 $\mu$m, optimale pour une utilisation en lit fluidisé, FR 1 505 184 et US 3 472 617 proposent d'utiliser des particules de silice-alumine ou de kaolin mises en forme par atomisation, calcinées à une température supérieure à 425°C et de les soumettre à une digestion caustique se décomposant en une phase de vieillissement à température modérée et en une phase de cristallisation autour de 100°C pour les convertir en zéolite, notamment en zéolites A, X ou Y.

La conversion est lente et partielle, ce qui rend le procédé peu économique et le long traitement caustique risque de mettre en péril l'intégrité des particules.

Le document US-A1-2006/0148642 présente des adsorbants pour l'élimination du $CO_2$ dans les fumées, comprenant un ou plusieurs composés actifs capables de former des carbonates et de retenir ainsi le $CO_2$, un support poreux et un liant inorganique. Les adsorbants fabriqués par cette méthode sont semi-sphériques, le support poreux ne constitue qu'une faible proportion des agglomérés et la tenue mécanique est assurée par l'incorporation d'alumine ou de silicate de calcium, qui, au terme de réactions en milieu basique, forment des liants très durs.

US 5 856 264 propose des agglomérés adsorbants creux (cénosphères) pour double-vitrage, produits par atomisation à partir de mélanges de zéolite et d'argile. Les effets recherchés sont la diminution de la proportion de matière adsorbante dans l'aggloméré et une faible densité au remplissage. Le taux de matière inactive argileuse est d'au moins 20 %. Les agglomérés ont une tenue mécanique tellement limitée qu'elle n'est pas mesurable, comme indiqué dans la colonne 6, lignes 52 à 55. Ce type d'agglomérés est totalement impropre à l'utilisation dans des procédés d'adsorption dynamiques.

Il existe un besoin non satisfait de disposer d'agglomérés sphériques à base de zéolite(s) ayant une teneur élevée en zéolite(s), typiquement supérieure à 70 % en masse comptés en équivalents calcinés, de taille (diamètre volumique moyen) inférieure ou égale à 0,6 mm et ayant une bonne tenue mécanique adaptée à l'utilisation dans des procédés d'adsorption, en catalyse.

La demanderesse a découvert qu'il était possible de pallier les inconvénients cités dans l'art antérieur et de fabriquer de manière économique par atomisation des agglomérés à forte teneur en matière active zéolitique, denses, résistants mécaniquement, de morphologie maîtrisée la plus proche possible de la sphéricité.

[Exposé de l'invention]

Sauf indication contraire, dans tout ce qui suit les proportions indiquées sont des proportions pondérales, comptées pour les constituants solides en équivalents calcinés, sur la base de calcinations réalisées à 950°C pendant 1 heure.

La présente invention concerne des agglomérés zéolitiques :

- de teneur en zéolite(s) strictement supérieure ou égale à 80 %, et avantageusement supérieure ou égale à 90 % en masse et contenant au plus 20%, et avantageusement au plus 10 %, de liant inerte, comptés en équivalents calcinés, ledit liant inerte comprenant, de préférence consistant en, une argile ou un mélange d'argiles ;
- de diamètre volumique moyen ($D_{50}$) allant de 50 $\mu$m à 400 $\mu$m, plus préférentiellement de 50 $\mu$m à 250 $\mu$m ;
- de masse volumique apparente allant de 0,5 g/cm$^3$ à 0,8 g/cm$^3$ ;
- de résistance à l'écrasement en lit (REL) mesurée selon la norme ASTM 7084-04 allant de 0,5 MPa à 3 MPa, allant de préférence de 0,75 MPa à 2,5 MPa,
- d'émoussé moyen allant de 85 % à 100 %, de préférence de 90 % à 100 % ;
- d'allongement, tel que le pourcentage de particules ayant un allongement de 0 % va de 10 à 100 et de préférence de 25 à 100, et le pourcentage de particules ayant un allongement inférieur à 10 % va de 70 à 100 et de préférence de 80 à 100.

Dans la présente invention, les agglomérés comprennent une zéolite ou un mélanges de zéolites avantageusement choisies parmi les zéolites A, les faujasites, de préférence Y, X, LSX, la chabazite et la clinoptilolite. La ou les zéolite(s) présente(nt) avantageusement des tailles de cristaux, mesurées au microscope électronique à balayage (MEB), comprises entre 0,5 $\mu$m et 20 $\mu$m, de préférence entre 0,5 $\mu$m et 10 $\mu$m. Des zéolites de tailles inférieures à 0,5 $\mu$m peuvent toutefois être observées, mais ne sont pas majoritaires.

Le liant compris dans les agglomérés zéolitiques de la présente invention comprend (i.e. à base de) une argile ou d'un mélange d'argiles. Celles-ci sont de préférence choisies parmi les kaolins, kaolinites, nacrites, dickites, halloysites, attapulgites, sépiolites, montmorillonites, bentonites, illites et/ou métakaolins, plus préférentiellement parmi les kaolins et les halloysites.

Selon un aspect particulièrement préféré de l'invention, le liant présent dans les agglomérés est uniquement constitué d'une ou plusieurs argiles, de préférence d'une seule argile.

Les agglomérés zéolitiques selon la présente invention peuvent également comprendre un ou plusieurs autres composants, en quantité comprise entre 0 et 5 %, de préférence entre 0 et 1 %, de préférence encore entre 0 et 0,5 % en poids par rapport au poids de l'aggloméré zéolitique. Ces autres composants sont généralement les résidus des additifs, et autres auxiliaires de synthèse desdits agglomérés zéolitiques, tels qu'ils seront décrits plus loin.

Des exemples de tels composants sont par exemple les cendres des additifs après calcination, de la silice, et autres. Il doit être compris que ces autres composants sont généralement présents à l'état de résidus ou de traces et ne sont pas utilisés pour apporter un quelconque caractère liant ou cohésif aux agglomérés zéolitiques de l'invention.

Le diamètre volumique moyen ($D_{50}$) des agglomérés est déterminé par tamisage. La masse volumique apparente par pesée de la quantité de produit contenu dans un volume mesuré donné, qui a été rempli par chute libre des agglomérés d'une hauteur connue depuis un entonnoir d'orifice connu.

Comme indiqué précédemment, le diamètre volumique moyen ($D_{50}$) des agglomérés zéolitiques selon l'invention est compris entre 50 $\mu$m et 400 $\mu$m. On préfère plus particulièrement les agglomérés zéolitiques dont le diamètre volumique moyen est compris entre 50 $\mu$m et 180 $\mu$m. Selon un autre aspect, on préfère les agglomérés zéolitiques dont le diamètre volumique moyen est compris entre 250 $\mu$m et 400 $\mu$m.

La méthode retenue pour caractériser la résistance mécanique des agglomérés est la norme ASTM D 7084-04 qui permet de déterminer la résistance à l'écrasement d'un lit de solides constitués de billes ou d'extrudés de longueur inférieure ou égale à 4,8 mm. Une force croissante est imposée par paliers par l'intermédiaire d'un piston sur un échantillon de 20 cm$^3$ d'agglomérés placés dans un cylindre métallique de section interne connue.

Les fines obtenues aux différents paliers de pression sont séparées par tamisage et pesées. Les tamis utilisés sont adaptés pour les agglomérés de taille inférieure à 1 000 $\mu$m. Des tamis de 200 $\mu$m, de 80 $\mu$m et de 40 $\mu$m sont utilisés pour les agglomérés de tailles moyennes comprises respectivement entre 500 $\mu$m et 1 000 $\mu$m, entre 180 $\mu$m et 500 $\mu$m et respectivement entre 50 $\mu$m et 180 $\mu$m.

Sur un graphique représentant la masse cumulée de fines obtenues en fonction de la force appliquée sur le lit d'adsorbant, la résistance à l'écrasement en lit (REL) est déterminée par interpolation de la charge appliquée à 0,5 % en masse de fines cumulées et calcul de la pression correspondante en MPa, en rapportant la force interpolée à la surface de la section interne du cylindre.

L'allongement A, exprimé en pourcentages et parfois appelé dans la littérature « facteur de forme elliptique », se calcule à partir du rapport entre le grand et le petit axe de l'ellipse inertielle de la particule a et b, selon la formule A = 100 (1 - a/b). L'allongement est égal à 0 pour une particule sphérique ; il croît pour des formes s'écartant de la sphéricité et tend vers 100 pour une particule allongée telle qu'une fibre.

L'émoussé, communément appelé « *roundness* », exprimé en pourcentages, est calculé à partir des moments de la distribution des cercles inscrits dans la particule tangents aux points du contour de la particule, selon un filtrage complexe. Il est représentatif de la variation du rayon de courbure des particules et traduit la maturité d'un grain dans un processus d'abrasion. Les aspérités douces sont plus significatives que les aspérités très saillantes. Plus la forme des particules se rapproche de la sphéricité parfaite, plus l'émoussé est proche de 100 %.

La présente invention a également pour objet un procédé d'obtention des agglomérés décrits précédemment comprenant les étapes suivantes :

1/ mélange et mise en suspension dans de l'eau de cristallites d'une ou plusieurs zéolites naturelles ou synthétiques en poudre, au moins un liant à base d'une argile ou d'un mélange d'argiles, éventuellement jusqu'à 5 %, de préférence de 0,1 % à 1 %, de la masse totale de solides en équivalents calcinés d'un ou plusieurs additif(s), de préférence organiques, facilitant la dispersion, le maintien en suspension, et éventuellement jusqu'à 5 % de la masse totale de solides en équivalents calcinés d'une source de silice liquide et/ou solide, de préférence représentant de 1 % à 5 % de la masse totale desdits solides, la quantité d'eau introduite étant telle que le résiduel sec de matières solides de la suspension après mise en température à 950°C pendant 1 heure soit compris entre 40 % et 60 % ;

2/ mise en forme par atomisation de la suspension obtenue en 1/ pour produire des agglomérés sphériques dans un gaz chaud à une température d'entrée allant de 110°C et 300°C, de préférence allant de 130°C à 250 °C, éventuellement suivie d'une étape de tamisage et/ou de cyclonage ;

3/ calcination des agglomérés obtenus en 2/ à une température allant de 500°C à 600°C, éventuellement précédée d'une phase de séchage post-atomisation ;

4/ éventuellement mise en contact du produit résultant de 3/ avec une solution aqueuse basique alcaline suivie d'un lavage ;

5/ éventuellement échange ionique partiel ou total des agglomérés zéolitiques obtenus en 3/ ou en 4/, suivi d'un lavage ;

6/ séchage et activation à une température allant de 200°C à 600°C du produit issu de l'étape 4/ ou 5/.

La ou les zéolite(s) mise(s) en oeuvre dans le procédé de l'invention sont de préférence choisies parmi les zéolites A, les faujasites, de préférence Y, X, LSX, la chabazite et la clinoptilolite, comme indiqué précédemment.

La ou les zéolite(s) mise(s) en oeuvre à l'étape 1/ sont sous forme de poudre(s) et présentent généralement des tailles de cristaux mesurées au MEB comprises entre 0,5 $\mu$m et 20 $\mu$m, de préférence entre 0,5 $\mu$m et 10 $\mu$m.

Le ou les liant(s) mis en oeuvre comprennent, et de préférence est(sont) constitués de, une ou plusieurs argile(s), ces dernières étant de préférence choisies parmi les kaolins, kaolinites, nacrites, dickites, halloysites, attapulgites, sépiolites, montmorillonites, bentonites, illites et/ou métakaolins, de préférence encore parmi les kaolins et les halloysites.

Les additifs, de préférence organiques, destinés à faciliter la dispersion, le maintien en suspension et l'écoulement de la préparation aqueuse, sont de tout type connu de l'homme du métier, et plus particulièrement sont choisies parmi des molécules tensioactives cationiques, anioniques, non ioniques ou amphotères.

On peut citer de manière préférentielle mais non exhaustive les méthyl-celluloses et leurs dérivés, les lignosulfonates, les acides polycarboxyliques et les acides de copolymères carboxyliques, leurs dérivés aminés et leurs sels, notamment les sels alcalins et les sels d'ammonium, les solutions tampons. Les additifs sont introduits à raison de 0 à 5 %, de préférence de 0,1 % à 1 % en poids de la masse totale de la masse de solides en équivalents calcinés.

La quantité d'eau introduite est telle que le résiduel sec de la suspension après mise en température à 950°C pendant 1 h soit compris entre 40 % et 60 %, de préférence entre 50 % et 58 %. Lorsque la quantité d'eau introduite est telle que le résiduel sec (matières solides) est inférieur à 40 %, par exemple lorsque la suspension est préparée avec une grande quantité d'eau, les agglomérés obtenus ne sont pas suffisamment compacts et/ou denses pour présenter des propriétés mécaniques convenables.

Lorsque la quantité d'eau introduite est telle que le résiduel sec (matières solides) est supérieur à 60 %, par exemple lorsque la suspension est préparée avec une faible quantité d'eau, ladite suspension devient très visqueuse, voire pâteuse, et ne peut plus être pompée ou véhiculée.

Le mélange et la mise en suspension de l'étape 1/ sont opérés sous agitation de façon à obtenir une suspension homogène, facilement pompable et de préférence peu sujette à la décantation. Les constituants du mélange peuvent par exemple être introduits un à un ou en mélange dans l'eau préalablement additivée ou non de tensioactifs organiques.

Le mélange est éventuellement maintenu sous agitation pour éviter la sédimentation des particules solides. Si nécessaire, la suspension est filtrée avant atomisation.

Parmi les constituants du mélange, il est possible, mais non nécessaire d'ajouter une source de silice, comme indiqué précédemment. Cet ajout de source de silice n'est toutefois pas préféré, ou bien seulement dans de faibles proportions, par exemple dans une plage allant de 0,1 % à 2 % de préférence de 0,1 % à 1,5 % de la masse totale de la masse de solides en équivalents calcinés.

La suspension issue de l'étape 1/ est envoyée dans un atomiseur au moyen d'une pompe, pulvérisée et séchée de manière à former des particules sphériques de tailles comprises entre 40 $\mu$m et 600 $\mu$m. Le gaz chaud, par exemple de l'air sec ou de l'azote, entre dans la chambre d'atomisation à une température comprise en général entre 110°C et 300°C, de préférence allant de 130°C à 250°C.

La température du gaz chaud doit être réglée de sorte que les agglomérés produits soient suffisamment secs pour ne pas se coller entre eux et que l'eau soit expulsée des grains sphériques en leur conservant leur intégrité physique, c'est-à-dire sans que les grains n'éclatent ou se perforent sous l'effet d'une expulsion trop brutale de vapeur d'eau.

Les conditions d'atomisation sont ajustées selon la géométrie de l'atomiseur et le type de buses de pulvérisation. Par exemple, la teneur en matières solides et la viscosité de la suspension, les débits et pressions de la suspension et du gaz dans la chambre et dans la buse si elle est bi-fluide permettent de régler la taille moyenne des agglomérés, comme l'enseigne l'ouvrage « Spray Drying Handbook », K. Masters, 5e édition, Longman Scientific & Technical, (1991).

L'utilisation d'atomiseurs commerciaux, d'atomiseurs industriels de plus grandes dimensions ou l'usage d'autres types de buses de pulvérisation ne sortirait pas du cadre de la présente invention.

A l'issue de l'étape 2/, les particules les plus fines peuvent être éliminées par cyclonage et/ou tamisage et/ou les particules trop grosses par tamisage.

La durée de l'étape 2/ doit être telle qu'à l'issue de l'étape 2/, les agglomérés soient suffisamment secs pour ne pas se coller entre eux et pour que l'eau soit expulsée des grains sphériques en leur conservant leur intégrité physique.

Les agglomérés issus lors de l'étape 2/ peuvent également subir un traitement de finition, selon des techniques classiques connues de l'homme du métier, tel qu'un enrobage avec une pâte de composition similaire à celle du coeur (i.e mélange de l'étape 1/) et/ou avec une formulation différente. De tels agglomérés zéolitiques enrobés avec une pâte de composition similaire à celle du coeur (i.e. le mélange de l'étape 1/) et/ou avec une formulation différente sont ainsi obtenus.

La calcination (étape 3/) est typiquement menée à une température comprise entre 500°C et 600°C. Elle peut éventuellement être précédée d'un séchage complémentaire au séchage par atomisation, ce séchage complémentaire étant effectué entre l'étape 2/ et l'étape 3/ décrites précédemment.

Les agglomérés issus de l'étape 3/ sont ensuite éventuellement soumis à un traitement dans une solution aqueuse basique alcaline (étape 4/): ce traitement peut être par exemple pratiqué par macération à chaud dans une solution d'un hydroxyde alcalin ou alcalino-terreux, de préférence dans une solution d'hydroxyde de sodium ou dans un mélange de soude et de potasse, dont la concentration est de préférence supérieure à 0,5 M, comme décrit dans la demande internationale WO 1999/05063.

Suite à un tel traitement, et notamment lorsque le liant est à base de kaolin(s), kaolinite(s), nacrite(s), dickite(s), halloysite(s), et/ou métakaolin(s), on obtient la transformation, au moins partielle, du liant inerte au sens de l'adsorption en matière active au sens de l'adsorption. Les agglomérés sont ensuite lavés, en général à l'eau.

Les agglomérés issus des étapes 3/ ou 4/ peuvent éventuellement subir un ou plusieurs échanges de tout ou partie de leurs cations par mise en contact, à froid ou à chaud, avec une solution saline, par exemple de sels de lithium, de sodium, de potassium, de calcium et/ou de baryum. L'échange ionique (étape 5/) est suivi d'une étape de lavage, en général à l'eau.

L'étape 6/ de séchage et activation est effectuée sur les produits et/ou agglomérés issus des étapes 4/ et/ou 5/. Cette étape de séchage et activation a pour but d'éliminer au moins partiellement l'eau présente dans les cristallites de zéolite, de façon à conférer à l'adsorbant ses propriétés d'usage. Cette étape se réalise usuellement entre 200°C et 600°C.

La présente invention concerne également l'utilisation des agglomérés zéolitiques définis plus haut dans les procédés de séparation par adsorption et dans le domaine de la catalyse.

Les agglomérés de la présente invention sont particulièrement adaptés pour les applications où la maîtrise de la morphologie en terme de taille, d'homogénéité et/ou de sphéricité est importante, au même titre que la haute teneur en matière active zéolitique ainsi que dans les procédés qui requièrent des résistances mécaniques à l'écrasement et à l'attrition élevées et des pertes de charge maîtrisées, notamment dans les procédés d'adsorption modulés en pression.

Grâce à leurs morphologies non anguleuses, régulières et sphériques, les agglomérés de l'invention peuvent avantageusement être utilisés dans tous les procédés de séparation où la maîtrise de l'écoulement des flux gazeux ou liquides à séparer ou à purifier est importante.

On peut citer notamment les procédés d'adsorption modulés en pression en phase gazeuse, tels que par exemple les « *pressure swing adsorption* » ou « PSA » en langue anglaise, ou encore les « *pressure parametric pumping* » ou PPP en langue anglaise, tels que décrits dans « Gas séparation by adsorption processes », R.T. Yang, Butterworths, (1987), chapitre 6, p. 201 à 235), les procédés d'adsorption modulés en température en phase gazeuse et/ou liquide, les procédés d'adsorption en lit fixe sans régénération, les procédés de séparation où les espèces éliminées d'un mélange par adsorption sont déplacées au moyen d'un constituant tiers tel qu'un solvant, en particulier dans des technologies de lits mobiles simulés.

Les agglomérés de l'invention sont particulièrement appropriés aux dispositifs d'adsorption modulés en pression selon des cycles très courts, par exemple dans les concentrateurs d'oxygène d'assistance respiratoire.

Selon un autre aspect, un lit fixe d'adsorption, éventuellement régénérable, est décrit, lequel comprend au moins un aggloméré zéolitique selon la présente invention. Ledit lit fixe comprend avantageusement un conteneur renfermant une quantité d'aggloméré(s) zéolitique(s) inférieure à 50 kg, de préférence inférieure à 15 kg, de préférence encore inférieure à 8 kg. Avantageusement le lit fixe d'adsorption renferme une quantité d'aggloméré inférieure à 3 kg, de préférence inférieure à 1 kg, de préférence encore inférieure à 500 g. Cette quantité est généralement supérieure à 10 g, de préférence supérieure à 25 g, généralement supérieure à 50 g.

Un tel lit fixe d'adsorption trouve une application tout à fait avantageuse dans les concentrateurs d'oxygène d'assistance respiratoire, notamment les concentrateurs transportables, mobiles, voire portatifs.

Selon encore un autre aspect, un matériau composite est décrit, lequel comprend au moins un aggloméré zéolitique selon la présente invention et au moins une matrice polymère, par exemple choisie parmi les polymères thermoplastiques et les polymères thermodurcissables. Le composite peut être obtenu selon tout procédé connu en soi, par exemple mélangeage, compoundage, dry-blending et autre.

Le matériau composite comprend généralement de 5 % à 95 %, de préférence de 20 % à 95 %, de préférence encore de 75 % à 95 % en poids d'au moins un aggloméré zéolitique selon l'invention, par rapport au poids total du composite.

Les agglomérés zéolitiques de l'invention, et en particulier les composites décrit ci-dessus contenant lesdists agglomérés, sont tout à fait adaptés comme élément d'adsorption dans les concentrateurs d'oxygène d'assistance respiratoire.

Selon un aspect particulièrement avantageux de l'invention, les agglomérés zéolitiques, notamment les composites les contenant constituent la matière active d'une cartouche consommable d'adsorbant zéolitique, insérable dans un concentrateur d'oxygène d'assistance respiratoire, qu'il soit transportable, mobile, de préférence portatif.

En variante, la cartouche consommable peut comprendre en outre ou à la place du matériau composite, un lit fixe d'adsorbant zéolitique défini ci-dessus.

Selon encore un autre aspect, l'invention a trait à un concentrateur d'oxygène d'assistance respiratoire, transportable, mobile, de préférence portatif, comprenant au moins un aggloméré zéolitique, ou au moins un lit fixe d'adsorption, ou au moins un matériau composite, ou au moins une cartouche, tels qu'ils viennent d'être décrits dans la description de la présente invention.

[Manières de réaliser l'invention]

Pour les exemples qui suivent, la demanderesse a utilisé un atomiseur dont les principales caractéristiques sont données ci-après :

La suspension est pulvérisée au moyen d'une buse pneumatique bi-fluide, à mélange externe, fixée en haut d'une chambre en inox en forme de silo de hauteur 5,25 m et de diamètre 0,7 m. Le gaz chaud circule à co-courant, en cycle ouvert et il est réparti par une plaque de distribution du gaz sur toute la surface de la chambre. L'écoulement de gaz chaud est faiblement turbulent et une légère dépression est maintenue dans la chambre au moyen de ventilateurs.

Il est disponible à une pression comprise entre 0,1 MPa et 0,6 MPa et à un débit compris entre 0 $Nm^3.h^{-1}$ et 260 $Nm^3.h^{-1}$. Le diamètre interne de la buse est de 2 mm. La suspension est introduite au moyen d'une pompe à vis excentrée et pulvérisée à une pression comprise entre 0,1 MPa et 2 MPa, à un débit compris entre 5 $L.h^{-1}$ et 25 $L.h^{-1}$.

Les propriétés physiques des agglomérés sont évaluées par des méthodes connues de l'homme de l'art : la perte au feu est déterminée par pesée avant et après calcination à 950°C pendant 1 heure.

La cristallinité des agglomérés est estimée par des méthodes classiques telles que les mesures des volumes de Dubinin (adsorption d'azote liquide à 77 K), ou les indices d'adsorption de toluène (capacités d'adsorption de toluène à une pression relative de 0,5 à 25°C après une exposition de 2 h, comme décrit dans la demande de brevet EP-A-1 116 691 ou le brevet US-B-6 464 756), ou encore d'eau (capacités d'adsorption d'eau après 24 heures de séjour dans une enceinte fermée à 23 ± 2°C, dont l'humidité relative est égale à 50 %, comme décrit dans la demande de brevet EP-A-1 223 147).

Le volume de Dubinin est calculé selon la relation de Dubinin-Radushkevich, telle que décrite par Lowell et coll. dans « Characterization of Porous Solids and Powders : Surface Area, Pore Size and Density », chapitre 9, « Micropore Analysis », pages 143-145 :

$$\log V = \log V_0 - D(\log \frac{P}{P_0})^2$$

qui relie le volume V d'azote adsorbé dans le matériau adsorbant à la pression relative P/$P_0$. Le volume $V_0$ est le volume maximal de vapeur d'azote que l'on peut condenser dans les micropores du matériau adsorbant. Il s'exprime en $cm^3$ de vapeur d'azote (ramenée aux conditions normales) par gramme d'adsorbant.

Le volume de Dubinin est alors calculé à partir du volume $V_0$ de gaz, qui est ensuite converti en volume de liquide : il s'exprime en $cm^3$ par gramme d'adsorbant et correspond au volume microporeux disponible pour l'adsorption.

Préalablement à la mesure, l'échantillon est prétraité à 500°C pendant 12 heures sous vide (P < $5.10^{-6}$ Torr, soit $6,7.10^{-4}$ Pa). La mesure est ensuite effectuée sur un appareil de type ASAP 2010 M de Micromeritics. Le tracé de l'isotherme est réalisé à l'aide d'une table de pression d'au moins 35 points entre 0,01 et 1 P/$P_0$. On porte sur un diagramme la valeur de log V en fonction de $(\log(P/P_0))^2$. Le volume de Dubinin est obtenu à partir de l'ordonnée à l'origine de la droite de régression linéaire des points dont $(\log(P/P_0))^2$ est compris entre 1 et 2 (soit 0,039 < P/$P_0$ < 0,1). L'incertitude de mesure est de ± 0,003.

On peut évaluer la teneur en zéolite (matière active) d'un aggloméré en calculant le rapport du volume de Dubinin de l'aggloméré sur le volume de Dubinin de la poudre de zéolite seule.

La microscopie électronique à balayage permet une observation et une appréciation visuelle de la morphologie des agglomérés.

La morphométrie, basée sur l'acquisition vidéo et sur l'analyse d'images, permet d'accéder à des paramètres quantifiables caractéristiques de la morphologie des particules. Il existe différents dispositifs commerciaux : à titre d'exemples, on peut citer les appareils Morphologi G2 de Malvern, Camsizer de Retsch, Alpaga 500 Nano de Occhio, décrits sur les pages internet www.malvern.com, www.retsch-technology.com, ou encore www.occhio.be.

Au moyen de l'appareillage Alpaga 500 Nano, on réalise pour chaque échantillon testé des acquisitions sur 10000 particules et on calcule les paramètres d'allongement et d'émoussé pour chaque particule.

Les outils mathématiques utilisés pour leur calcul sont développés dans la thèse de doctorat de E. Pirard (1993, Université de Liège, 253 p.) intitulée « Morphométrie euclidienne des figures planes. Applications à l'analyse des matériaux granulaires ». Le document, intitulé « *The descriptive and quantitative représentation of particle shape and morphology* » est disponible sous la référence ISO/DIS 9276-6.

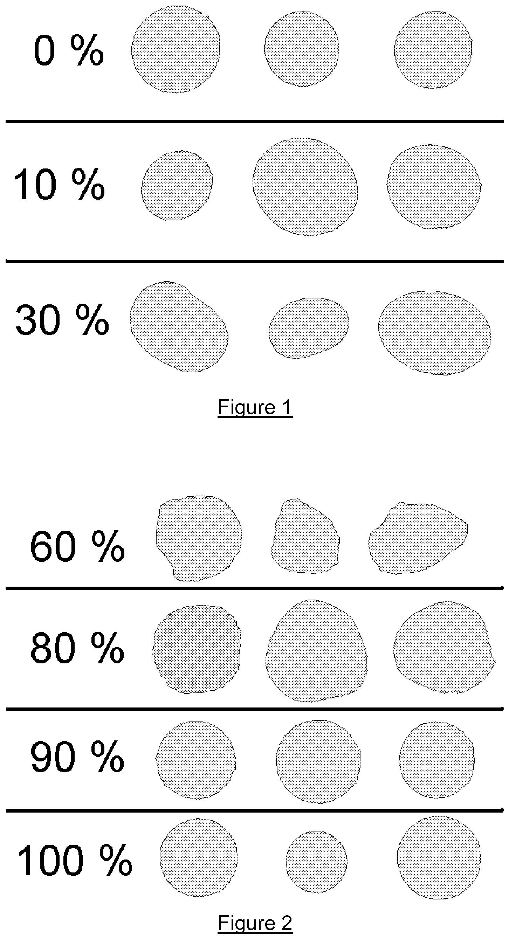

L'allongement A est défini plus haut. La Figure 1 présente des ombres projetées de 9 particules correspondant à différentes valeurs d'allongement.

L'émoussé est défini plus haut. La Figure 2 montre des ombres projetées de 12 particules correspondant à différentes valeurs d'émoussé.

Exemple 1 (comparatif)

Selon les techniques connues de l'homme de l'art, on forme des agglomérés au laboratoire, au moyen d'une assiette granulatrice fonctionnant en continu, à partir d'une pâte contenant 8300 g (exprimés en équivalents calcinés)de poudre de zéolite NaX de D50: 2 $\mu$m à 5 $\mu$m, 1 500 g de kaolin (exprimés en équivalents calcinés), de 667 g de silice colloïdale commercialisée sous la dénomination Klebosol 30 contenant 30 % en masse de $SiO_2$, et de l'eau en quantité appropriée.

Les agglomérés grossissent par effet boule de neige et sont écartés de l'assiette granulatrice par débordement puis tamisage dès lors qu'ils atteignent la taille recherchée. Les fines sont recyclées dans l'assiette de granulation. De cette façon, on obtient des agglomérés de taille moyenne, déterminée par tamisage, égale à 600 $\mu$m. Ils sont ensuite séchés à 80°C et activés pendant 2 h à 550°C dans un four ventilé.

À la fin de l'agglomération, le fond de l'assiette de granulation est séché à 80°C puis tamisé entre 200 $\mu$m et 500 $\mu$m. Par tamisage, le diamètre moyen des agglomérés ainsi sélectionnés est estimé à 300 $\mu$m. Ils sont ensuite calcinés pendant 2 heures à 550°C dans un four ventilé.

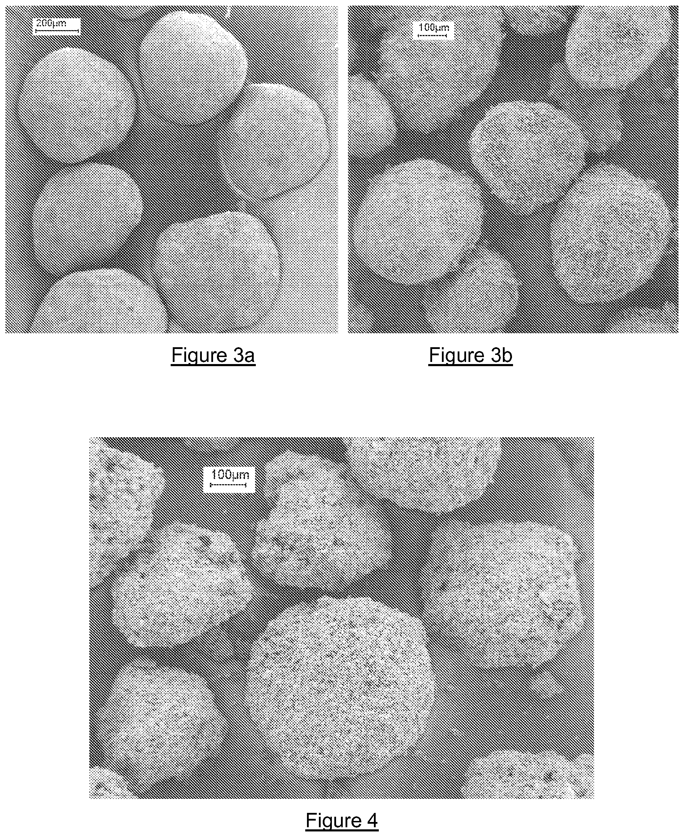

La Figure 3 montre deux photographies réalisées au microscope électronique à balayage des agglomérés de 600 $\mu$m (Figure 3a) et de 300 $\mu$m (Figure 3b) ainsi préparés. Les clichés révèlent que les agglomérés présentent des formes anguleuses et de surcroît, on constate que les agglomérés de 300 $\mu$m sont poussiéreux. Par ailleurs, la résistance en lit des agglomérés de 300 $\mu$m n'est que de 0,2 MPa, alors que celle des agglomérés de 600 $\mu$m est de 1,8 MPa.

L'exemple montre que la technique traditionnelle d'agglomération en assiette granulatrice ne permet pas d'obtenir des agglomérés de morphologie régulière proche de la sphéricité et de tenue mécanique convenable aux faibles granulométries.

Exemple 2 (comparatif)

On utilise ici pour l'agglomération un mélangeur-granulateur Eirich. 8 700 g (exprimés en équivalents calcinés) de poudre de zéolite LSX (acronyme de Low Silica X, zéolite X à faible taux de silice) de taille 5 $\mu$m à 10 $\mu$m et de rapport molaire Si/Al 1 $\pm$ 0,03 sont mélangés avec 1 300 g d'halloysite (exprimés en équivalents calcinés). On introduit ensuite progressivement en environ 30 minutes une quantité appropriée d'eau pour former des nodules de pâte.

Les nodules sont ensuite sélectionnés par tamisage entre 0,3 mm et 0,6 mm puis polis sur une assiette de polissage. Par tamisage, le diamètre volumique moyen est estimé à 500 $\mu$m. Les agglomérés sont séchés à 80°C puis calcinés pendant 2 h à 550°C en four ventilé.

La résistance en lit des agglomérés ainsi obtenus est de 0,1 MPa, ce qui est médiocre. La Figure 4 montre une photographie réalisée au microscope électronique à balayage des agglomérés obtenus. Les agglomérés ont des formes irrégulières.

Exemple 3 (comparatif selon US 5 856 264)

On prépare une suspension en introduisant successivement dans de l'eau permutée 8000 g de zéolite LSX (en équivalents calcinés), 2 050 g d'halloysite (en équivalents calcinés) et 200 g de carboxy-méthyl cellulose de sodium contenant 30 % d'eau en tant qu'additif. La quantité d'eau introduite est ajustée pour que la perte au feu de la suspension soit de 65 %. La teneur en matière solide de la suspension est de 35 %.

La suspension est maintenue sous agitation, avec un fort cisaillement, pendant 3 h, de façon à la rendre homogène. Puis elle est envoyée à raison de 9 L.h$^{-1}$ vers l'atomiseur décrit ci-dessus au moyen d'une pompe, pulvérisée et séchée dans de l'air chaud. La viscosité de la suspension est de 300 cP. Le débit d'air chaud circulant à co-courant est de 200 Nm$^3$.h$^{-1}$ et sa température d'entrée est de 400°C.

La pression de l'air envoyé dans la buse est de 30 kPa. Les agglomérés sont collectés en bas de la tour d'atomisation et activés à 550°C pendant 2 h en four ventilé.

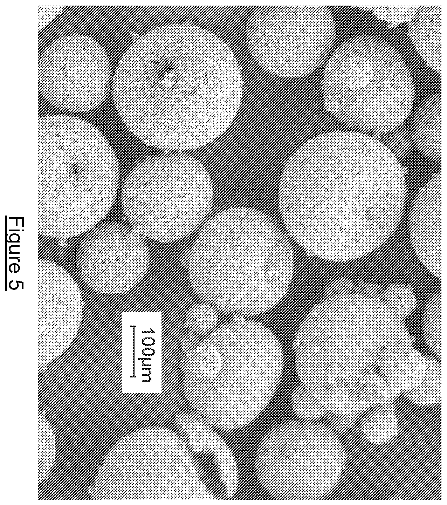

La Figure 5 montre un cliché pris au microscope électronique à balayage des agglomérés de diamètre volumique

moyen 180 μm ainsi obtenus. Les agglomérés ainsi produits ont une morphologie régulière proche de la sphéricité. La photographie révèle cependant la présence de cavités telles que décrites par le document US 5 856 264, ainsi que la présence de brisures.

La masse volumique apparente est seulement de 0,47 g.cm$^{-3}$. La résistance en lit des agglomérés n'est quasiment pas mesurable. Elle est estimée à 0,02 MPa, ce qui signifie que les agglomérés n'ont quasiment pas de tenue mécanique et ne sont pas appropriés pour des utilisations dans des procédés dynamiques d'adsorption.

Exemple 4 (selon l'invention)

On prépare une suspension en introduisant successivement dans de l'eau permutée 8000 g de zéolite LSX (en équivalents calcinés), 2 000 g d'halloysite (en équivalents calcinés) et 20 g d'un dispersant de type polycarboxylate, commercialisé sous la dénomination Acumer 9300 par la société Rohm & Haas. La quantité d'eau introduite est ajustée pour que la perte au feu de la suspension soit de 48,3 %.

La teneur en matière solide de la suspension est de 51,7%. La suspension est maintenue sous agitation, avec un fort cisaillement, pendant 3 h puis elle est envoyée à raison de 5 L.h$^{-1}$ vers un atomiseur au moyen d'une pompe, pulvérisée et séchée dans de l'air chaud. La viscosité de la suspension est de 6 Po. La chambre d'atomisation et la buse d'atomisation ont les mêmes géométries que dans l'exemple 3.

Le débit d'air chaud circulant à co-courant est de 230 Nm$^3$.h$^{-1}$ et sa température d'entrée est de 200°C. La pression de l'air envoyé dans la buse est de 30 kPa. Les agglomérés sont collectés en bas de la tour d'atomisation, sélectionnés par tamisage entre 180 μm et 500 μm puis activés à 550°C pendant 2 h en four ventilé.

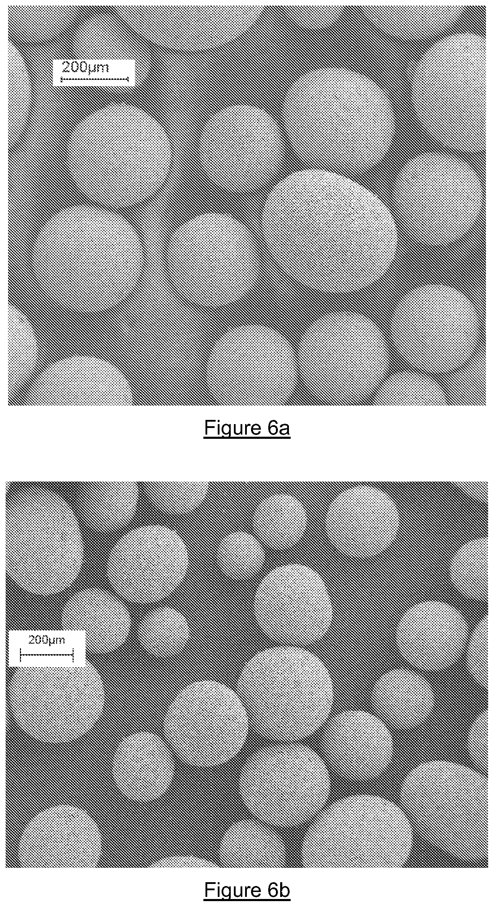

Le diamètre volumique moyen des agglomérés ainsi produits est de 310 μm. Les Figures 6a et 6b montrent deux clichés des agglomérés au microscope électronique à balayage. Leur morphologie est régulière et sphérique. On n'observe plus ni de brisures ni de cavités dues au dégagement de la vapeur d'eau comme dans l'exemple 3.

Le rapport du volume de Dubinin des agglomérés sur celui de la poudre LSX de départ est égal à 0,8, ce qui indique la présence de 80 % de matière active au sens de l'adsorption dans les agglomérés. La masse volumique apparente est de 0,60 g.cm$^{-3}$. La résistance en lit est de 1,3 MPa, ce qui rend les agglomérés capables de résister mécaniquement aux conditions d'exploitation des procédés dynamiques d'adsorption.

Exemple 5

On réalise des mesures morphométriques au moyen de l'appareillage Alpaga 500 Nano sur des agglomérés à base de zéolite LSX commercialisés par la société CECA sous la dénomination Nitroxy 51, de diamètre volumique moyen 620 μm, sur des agglomérés sélectionnés par tamisage d'un autre lot de Nitroxy 51 entre 315 μm et 630 μm (D$_{50}$ : 510 μm), sur les agglomérés préparés par assiette granulatrice selon l'exemple 1, sur les agglomérés préparés par mélangeur-granulateur selon l'exemple 2 et sur des agglomérés produits par atomisation selon l'exemple 4 (invention).

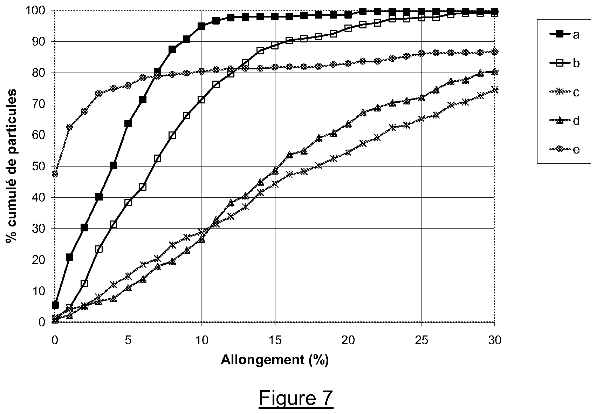

La Figure 7 présente pour chaque échantillon le pourcentage cumulé de particules en fonction de l'allongement.

échantillon a/ : agglomérés de Nitroxy 51,
échantillon b/ : agglomérés sélectionnés par tamisage d'un autre lot de Nitroxy 51 entre 315 μm et 630 μm (D$_{50}$ : 510 μm),
échantillon c/ : agglomérés produits par assiette granulatrice selon l'exemple 1 (comparatif),
échantillon d/ : agglomérés produits par mélangeur granulateur selon l'exemple 2 (comparatif),
échantillon e/ : agglomérés produits par atomisation selon l'exemple 4 (invention).

Plus de 80 % des particules atomisées ont un allongement inférieur à 10%, alors que moins de 30% des particules produites par assiette de granulation ou par mélangeur-granulateur ont un allongement inférieur à 10 %. À titre de comparaison, les agglomérés commerciaux tels que le Nitroxy 51 (échantillon a) ou la coupe de Nitroxy 51 sélectionnée par tamisage de D$_{50}$ 510 μm (échantillon b) ont eux aussi à plus de 70 % un allongement inférieur à 10 %, mais leur taille moyenne est plus grosse.

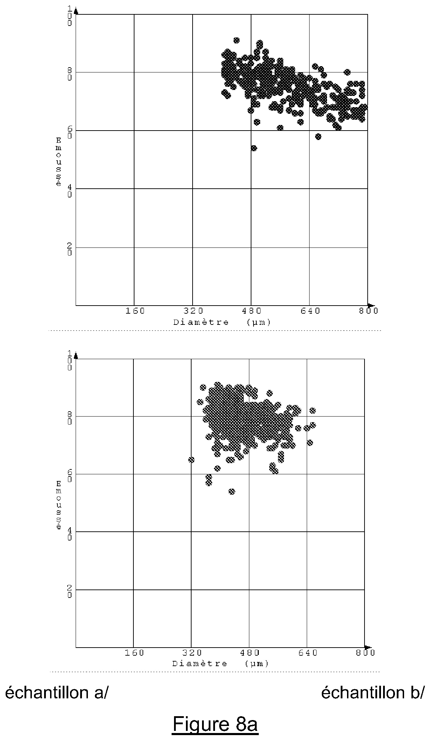

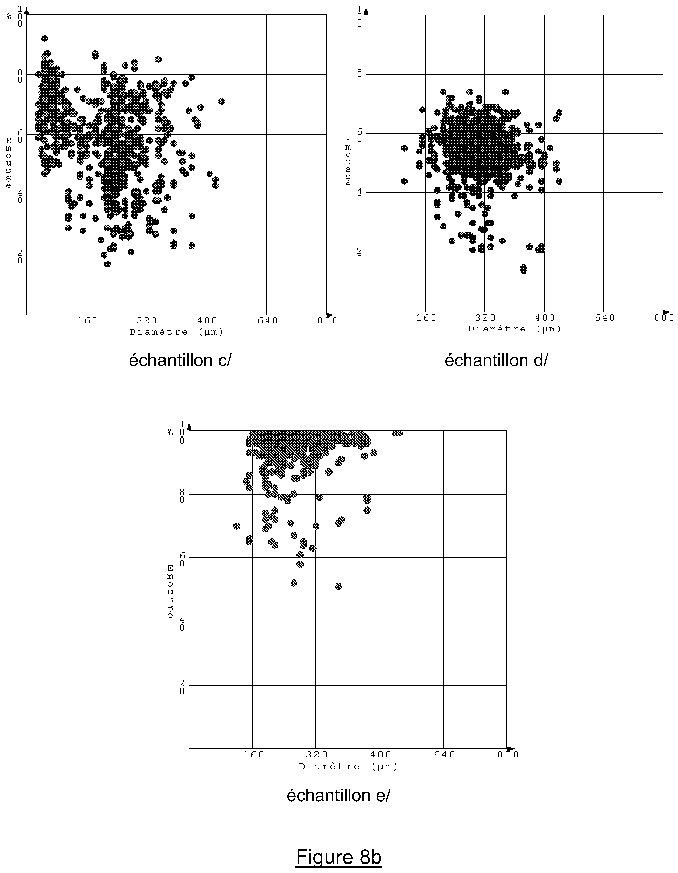

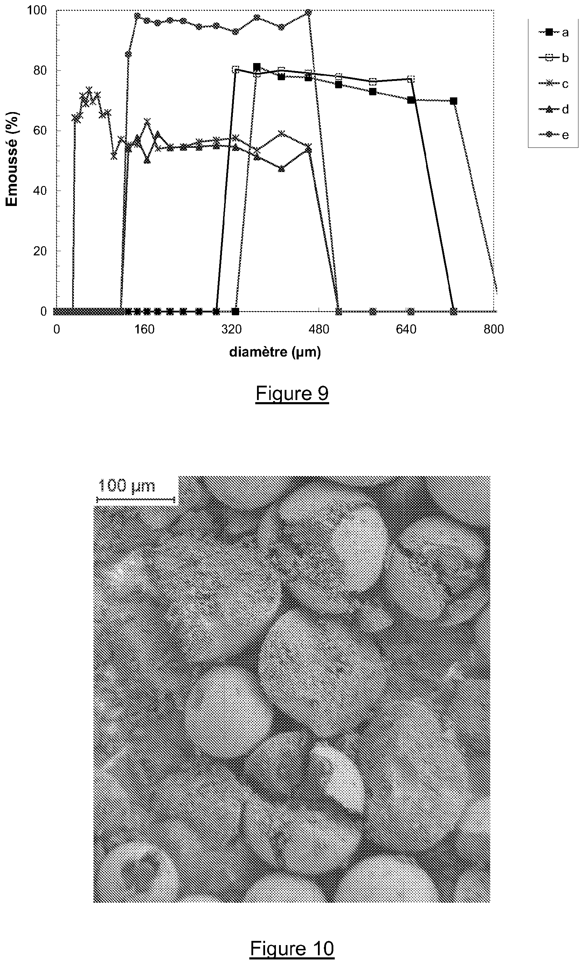

Les Figures 8a et 8b montrent respectivement, pour chaque échantillon a/ et b / et c/ à e/ définis ci-dessus, la répartition des valeurs calculées d'émoussé, exprimés en pourcentages, en fonction de la taille des particules ainsi que, sur la Figure 9, les valeurs moyennes d'émoussé en fonction de la taille des particules.

Les agglomérés commerciaux Nitroxy 51 et les agglomérés sélectionnés par tamisage de Nitroxy 51 ont des valeurs d'émoussé principalement comprises entre 60 % et 85 %, avec des valeurs moyennes d'émoussé d'environ 80 %.

Les agglomérés obtenus par assiette de granulation ou par mélangeur-granulateur sont de tailles plus petites mais présentent des morphologies irrégulières, avec des valeurs d'émoussé pour la plupart comprises entre 40 % et 80 %, avec des valeurs moyennes d'émoussé d'environ 60 %.

En revanche, les agglomérés produits par atomisation ont presque tous des valeurs d'émoussé comprises entre 85 % et 100 %, avec des valeurs moyennes d'émoussé proches de 95 %, ce qui montre leur presque parfaite sphéricité.

Exemple 6 (selon l'invention)

Selon la procédure décrite dans l'exemple 4, on prépare une suspension en introduisant successivement dans de l'eau permutée 8 000 g de zéolite LSX (en équivalents calcinés), 2000 g de kaolin (en équivalents calcinés) et 20 g d'un dispersant de type polycarboxylate, commercialisé sous la dénomination Acumer 9210 par la société Rohm & Haas.

La quantité d'eau introduite est ajustée pour que la perte au feu de la suspension soit de 46 %. La teneur en matière solide de la suspension est de 54 %. La viscosité de la suspension est de 4 Po. Le débit de la suspension dans la buse d'atomisation est de 7 L.h$^{-1}$. Le débit d'air chaud circulant à co-courant dans la chambre d'atomisation est de 230 Nm$^3$.h$^{-1}$ et sa température d'entrée est de 200°C. La pression de l'air envoyé dans la buse est de 58 kPa.

Les agglomérés sont collectés en bas de la tour d'atomisation, sélectionnés par tamisage entre 180 $\mu$m et 500 $\mu$m puis activés à 550°C pendant 2 h en four ventilé.

Les agglomérés formés sont denses, sphériques, résistants mécaniquement, à teneur en matière active supérieure à 70 % et de petite taille :

- le diamètre volumique moyen des agglomérés ainsi produits est de 330 $\mu$m ; le rapport du volume de Dubinin des agglomérés sur celui de la poudre LSX de départ est égal à 0,8, ce qui indique la présence de 80 % de matière active au sens de l'adsorption dans les agglomérés ;
- la masse volumique apparente des agglomérés est de 0,69 g.cm$^{-3}$ ;
- leur résistance en lit est de 1,0 MPa, ce qui rend les agglomérés capables de résister mécaniquement aux conditions d'exploitation des procédés dynamiques d'adsorption ;
- 29 % des particules ont un allongement égal à 0 ; 86 % des particules ont un allongement inférieur à 10 % et l'émoussé moyen est de 96 %.

Exemple 7 (selon l'invention)

100 g d'agglomérés de l'exemple 4 sont immergés dans 750 mL de solution aqueuse de soude de concentration 100 g.L$^{-1}$, à une température régulée à 98°C. Le système est maintenu en température sous une agitation douce pendant 3 h.

Les agglomérés sont ensuite lavés à l'eau jusqu'à ce que le pH final des eaux de lavage soit proche de 10. Les agglomérés sont séchés pendant 12 h à 80°C puis calcinés à 550°C pendant 2 h en four ventilé. La teneur en matière active au sens de l'adsorption, estimée au moyen du rapport du volume de Dubinin des agglomérés sur celui de la poudre LSX de départ, est de 92 %.

La résistance en lit des agglomérés est égale à 1,4 MPa. La masse volumique apparente est égale à 0,58 g.cm$^{-3}$. Les caractéristiques morphologiques restent inchangées.

Exemple 8 (selon l'invention)

On procède de la même manière que dans l'exemple 7 pour 100 g d'agglomérés fabriqués dans l'exemple 6. La teneur en matière active au sens de l'adsorption, estimée au moyen du rapport du volume de Dubinin des agglomérés sur celui de la poudre LSX de départ, est de 91 %. La résistance en lit des agglomérés est égale à 0,9 MPa. La masse volumique apparente est égale à 0,62 g.cm$^{-3}$. Les caractéristiques morphologiques restent inchangées.

Le tableau 1 compare les propriétés des agglomérés obtenus dans les différents exemples. Seuls les agglomérés selon notre invention ont à la fois une teneur en matière active élevée, une masse volumique apparente supérieure à 0,5 g.cm$^{-3}$, une résistance mécanique qui les rend utilisables dans les procédés dynamiques d'adsorption et une morphologie proche de la sphéricité.

Exemple 9 (ne faisant pas partie de l'invention)

On prépare une suspension en introduisant dans de l'eau permutée 7000 g de zéolithe LSX (en équivalents calcinés), 3000 g d'halloysite (en équivalents calcinés) et 20 g d'un dispersant de type polycarboxylate, commercialisé sous le nom Acumer 9300 par la société Rohm & Haas selon la procédure décrite dans l'exemple 4.

La quantité d'eau introduite est ajustée pour que la perte au feu de la suspension soit de 49,7 %. La teneur en matière solide de la suspension est de 50,3 %.

La viscosité de la suspension est de 12 Po. Le débit de la suspension dans la buse d'atomisation est de 5,5

L.h$^{-1}$. Le débit d'air chaud circulant à co-courant dans la chambre d'atomisation est de 240 Nm$^3$.h$^{-1}$ et sa température d'entrée est de 180°C. La pression de l'air envoyé dans la buse est de 28 kPa. Les agglomérés sont collectés en bas de la tour d'atomisation, sélectionnés par tamisage entre 180 $\mu$m et 400 $\mu$m puis activés à 550°C pendant 2 h en four ventilé.

100 g d'agglomérés ainsi obtenus sont immergés dans 750 mL de solution aqueuse de soude de concentration 100 g.L$^{-1}$, à une température régulée à 98°C. Le système est maintenu en température sous une agitation douce pendant 3 h. Les agglomérés sont ensuite lavés à l'eau jusqu'à ce que le pH final des eaux de lavage soit proche de 10. Les agglomérés sont séchés pendant 12 h à 80°C puis calcinés à 550°C pendant 2 h en four ventilé.

Le diamètre moyen des agglomérés ainsi produits est de 290 $\mu$m. Le rapport du volume de Dubinin des agglomérés sur celui de la poudre LSX de départ est égal à 0,74, ce qui indique la présence de 74 % de matière active au sens de l'adsorption dans les agglomérés.

La masse volumique apparente est de 0,51 g.cm$^{-3}$. La résistance en lit est de 1,7 MPa, ce qui rend les agglomérés capables de résister mécaniquement aux conditions d'exploitation des procédés dynamiques d'adsorption. 25 % des particules ont un allongement égal à 0 ; 75 % des particules ont un allongement inférieur à 10 % et l'émoussé moyen est de 93 %.

Les agglomérés formés sont denses, sphériques, résistants mécaniquement, à teneur en matière active supérieure à 74 % et de petites tailles.

Exemple 10 (selon l'invention)

On reproduit l'expérience réalisée à l'exemple 4, mais en sélectionnant par tamisage la coupe 80-180 $\mu$m. Les agglomérés recueillis sont calcinés à 550°C pendant 2 h en four ventilé.

Le diamètre volumique moyen des agglomérés ainsi produits est de 145 $\mu$m. Le rapport du volume de Dubinin des agglomérés sur celui de la poudre LSX de départ est égal à 0,80, ce qui indique la présence de 80 % de matière active au sens de l'adsorption dans les agglomérés.

La masse volumique apparente est de 0,54 g.cm$^{-3}$. La résistance en lit est de 1,05 MPa, ce qui rend les agglomérés capables de résister mécaniquement aux conditions d'exploitation des procédés dynamiques d'adsorption. 15% des particules ont un allongement égal à 0,80 % des particules ont un allongement inférieur à 10 % et l'émoussé moyen est de 88 %.

Les agglomérés formés sont denses, sphériques, résistants mécaniquement, à teneur en matière active supérieure à 80 % et de petites tailles.

Exemple 11 (selon l'invention)

Selon la procédure décrite dans l'exemple 4, on prépare une suspension avec 8 500 g de zéolite A sous sa forme sodium (en équivalents calcinés), 1 500 g d'halloysite (en équivalents calcinés) et 20 g d'un dispersant de type polycarboxylate, commercialisé sous la dénomination Acumer® 9210 par la société Rohm & Haas. La quantité d'eau introduite est ajustée pour que la perte au feu de la suspension soit de 47,2 %.

La teneur en matière solide de la suspension est de 52,8 %. La viscosité de la suspension est de 4 Po. Le débit de la suspension dans la buse d'atomisation est de 6 L.h$^{-1}$. Le débit d'air chaud circulant à co-courant est de 150 Nm$^3$.h$^{-1}$ et sa température d'entrée est de 200°C. La pression de l'air envoyé dans la buse est de 56 kPa.

Les agglomérés sont collectés en bas de la tour d'atomisation, sélectionnés par tamisage entre 80 $\mu$m et 500 $\mu$m puis activés à 550°C pendant 2 h en four ventilé.

Les agglomérés formés sont denses, sphériques, résistants mécaniquement, à teneur en matière active supérieure à 80 % et de petite taille :

- Le diamètre volumique moyen des agglomérés ainsi produits est de 240 $\mu$m ; le rapport de l'indice d'adsorption d'eau des agglomérés sur celui de la poudre A de départ est égal à 0,85, ce qui indique la présence de 85 % de matière active au sens de l'adsorption dans les agglomérés ;
- la masse volumique apparente est de 0,59 g.cm$^{-3}$ ;
- la résistance en lit est de 0,9 MPa, ce qui rend les agglomérés capables de résister mécaniquement aux conditions d'exploitation des procédés dynamiques d'adsorption ;
- 34 % des particules ont un allongement égal à 0 ; 83 % des particules ont un allongement inférieur à 10 % et l'émoussé moyen est de 95 %.

Exemple 12 (selon l'invention)

On reprend l'expérience de l'exemple 11, à ceci près qu'on prépare la suspension avec 8400 g de zéolite A (en équivalents calcinés), 1 500 g d'halloysite (en équivalents calcinés), 100 g (en équivalents calcinés) de silice colloïdale commercialisée sous la dénomination Klebosol® 30 et 20 g d'un dispersant de type polycarboxylate, commercialisé sous la dénomination Acumer® 9210 par la société Rohm & Haas.

Les autres paramètres restent inchangés. Les agglomérés formés présentent les mêmes propriétés qu'à l'exemple 11, en particulier la même résistance mécanique en lit: 0,9 MPa. La présence d'une faible proportion de silice colloïdale n'améliore pas la tenue mécanique de l'aggloméré.

Exemple 13 (comparatif)

1 670 g d'halloysite (en équivalents calcinés) sont introduits dans environ 10 litres d'eau. Dans cette suspension de pH = 4,4, on introduit 8 330 g de zéolite Y et environ 10 litres d'eau supplémentaires. La quantité d'eau introduite est ajustée pour que la perte au feu de la suspension soit de 70 %.

La teneur en matière solide de la suspension est de 30 %. La suspension est envoyée dans l'atomiseur selon la procédure suivie dans l'exemple 4. Le débit de la suspension dans la buse d'atomisation est de 6 L.h$^{-1}$. Le débit d'air chaud circulant à co-courant est de 150 Nm$^3$.h$^{-1}$ et la température du gaz en sortie d'atomiseur est de 100°C. La pression de l'air envoyé dans la buse est de 9 kPa.

Les agglomérés sont collectés en bas de la tour d'atomisation puis activés à 550°C pendant 2 h en four ventilé.

Les agglomérés ainsi obtenus sont informes et sans tenue mécanique. Leur résistance mécanique en lit est de 0,1 MPa, ce qui rend impossible leur utilisation dans les procédés dynamiques d'adsorption.

La Figure 10 montre un cliché des agglomérés au microscope électronique à balayage. Les particules ne sont pas sphériques, la plupart sont brisées, certaines présentent des cavités.

Exemple 14 (selon l'invention)

1 670 g d'halloysite (en équivalents calcinés) et 20 g d'un dispersant de type polycarboxylate, commercialisé sous le nom Acumer® 9210 par la société Rohm & Haas, sont introduits dans environ 10 litres d'eau. On introduit ensuite 8 330 g de zéolite Y dans la suspension d'argile. La quantité d'eau introduite est ajustée pour que la perte au feu de la suspension soit de 55,2 %.

La teneur en matière solide de la suspension est de 44,8 %. La suspension est envoyée dans l'atomiseur selon la procédure suivie dans l'exemple 4. Le débit de la suspension dans la buse d'atomisation est de 6 L.h$^{-1}$. Le débit d'air chaud circulant à co-courant est de 150 Nm$^3$.h$^{-1}$ et la température du gaz à l'entrée de l'atomiseur est de 175°C. La pression de l'air envoyé dans la buse est de 19 kPa.

Les agglomérés sont collectés en bas de la tour d'atomisation puis activés à 550°C pendant 2 h en four ventilé.

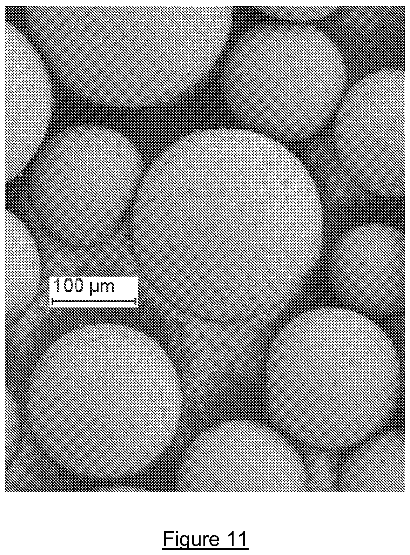

La Figure 11 montre un cliché des agglomérés au microscope électronique à balayage. Leur morphologie est régulière et sphérique. On n'observe plus ni brisures ni cavités dues à la fragilité mécanique et au dégagement de la vapeur d'eau comme dans l'exemple 13.

Les agglomérés formés sont denses, sphériques, résistants mécaniquement, à teneur en matière active supérieure à 80 % et de petite taille :

- le diamètre volumique moyen des agglomérés ainsi produits est de 235 $\mu$m ; le rapport du volume de Dubinin des agglomérés sur celui de la poudre Y de départ est égal à 0,83, ce qui indique la présence de 83 % de matière active au sens de l'adsorption dans les agglomérés ;
- la masse volumique apparente est de 0,5 g.cm$^{-3}$ ;
- la résistance en lit est de 0,5 MPa, ce qui rend les agglomérés capables de résister mécaniquement aux conditions d'exploitation des procédés dynamiques d'adsorption ;
- 38 % des particules ont un allongement égal à 0 ; 89 % des particules ont un allongement inférieur à 10 % et l'émoussé moyen est de 98 %.

Le tableau 1 ci-dessous rassemble les différentes caractéristiques des agglomérés des divers exemples ci-dessus, incluant les échantillons a/ à e/.

-- Tableau 1 --

| Échantillon ou Exemple | Ex 5 Ech. a/ | Ex 5 Ech.b/ | Ex 1 Ech. c/ | Ex 2 Ech. d/ | Ex 3 | Ex 4 Ech. e/ | Ex 6 | Ex 7 | Ex 8 | Ex 9 | Ex 10 |
|---|---|---|---|---|---|---|---|---|---|---|---|
| Taille moyenne ($\mu$m) | 620 | 510 | 300 | 500 | 180 | 310 | 330 | 310 | 330 | 290 | 145 |

(suite)

| Échantillon ou Exemple | Ex 5 Ech. a/ | Ex 5 Ech.b/ | Ex 1 Ech. c/ | Ex 2 Ech. d/ | Ex 3 | Ex 4 Ech. e/ | Ex 6 | Ex 7 | Ex 8 | Ex 9 | Ex 10 |
|---|---|---|---|---|---|---|---|---|---|---|---|
| Masse volumique apparente (g.cm$^{-3}$) | 0,62 | 0,60 | 0,68 | 0,66 | 0,47 | 0,60 | 0,69 | 0,58 | 0,62 | 0,51 | 0,54 |
| REL (MPa) | 2,1 | 1,7 | 0,2 | 0,1 | 0,02 | 1,3 | 1,0 | 1,4 | 0,9 | 1,7 | 1,05 |
| Teneur en matière active (%) | - | - | 83 | 87 | 79 | 80 | 80 | 92 | 91 | 74 | 80 |
| % particules ayant un allongement de 0% | 5 | 0,8 | 1,3 | 0,9 | 13 | 47 | 29 | 47 | 29 | 25 | 15 |
| % particules ayant un allongement inférieur à 10 % | 95 | 71 | 29 | 27 | 85 | 80 | 86 | 80 | 86 | 75 | 80 |
| Émoussé moyen (%) | 75 | 79 | 58 | 55 | 90 | 94 | 96 | 94 | 96 | 93 | 88 |

**Revendications**

1. Agglomérés zéolitiques

   • de teneur en zéolite(s) strictement supérieure ou égale à 80 %, et avantageusement supérieure ou égale à 90 % en masse et contenant au plus 20 %, et avantageusement au plus 10 %, de liant inerte, comptés en équivalents calcinés, ledit liant inerte comprenant, de préférence consistant en, une argile ou un mélange d'argiles ;
   • de diamètre volumique moyen ($D_{50}$) allant de 50 $\mu$m à 400 $\mu$m, plus préférentiellement de 50 $\mu$m à 250 $\mu$m ;
   • de masse volumique apparente allant de 0,5 g/cm$^3$ à 0,8 g/cm$^3$ ;
   • de résistance à l'écrasement en lit (REL) mesurée selon la norme ASTM 7084-04 allant de 0,5 MPa à 3 MPa, allant de préférence de 0,75 MPa à 2,5 MPa,
   • d'émoussé moyen allant de 85 % à 100 %, de préférence de 90 % à 100 % ;
   • d'allongement, tel que le pourcentage de particules ayant un allongement de 0 % va de 10 à 100 et de préférence de 25 à 100, et le pourcentage de particules ayant un allongement inférieur à 10 % va de 70 à 100 et de préférence de 80 à 100.

2. Agglomérés zéolitiques selon la revendication 1, dans lesquels la ou les zéolite(s) est(sont) choisies parmi les zéolites A, les faujasites, de préférence Y, X, LSX, la chabazite et la clinoptilolite.

3. Agglomérés zéolitiques selon la revendication 1 ou la revendication 2, dans lesquels le liant comprend, et de préférence est constitué de, une argile ou d'un mélange d'argiles choisies parmi les kaolins, kaolinites, nacrites, dickites, halloysites, attapulgites, sépiolites, montmorillonites, bentonites, illites et/ou métakaolins, de préférence parmi les kaolins et les halloysites.

4. Agglomérés zéolitiques selon l'une quelconque des revendications 1 à 3, présentant un diamètre volumique moyen ($D_{50}$) compris entre 50 $\mu$m et 180 $\mu$m.

5. Agglomérés zéolitiques selon l'une quelconque des revendications 1 à 3, présentant un diamètre volumique moyen ($D_{50}$) compris entre 250 $\mu$m et 400 $\mu$m.

6. Procédé d'obtention d'agglomérés selon l'une quelconque des revendications 1 à 5, **caractérisé en ce qu'**il comprend les étapes suivantes :

   1/ mélange et mise en suspension dans de l'eau de cristallites d'une ou plusieurs zéolites naturelles ou synthétiques en poudre, au moins un liant à base d'une argile ou d'un mélange d'argiles, éventuellement jusqu'à 5 %, de préférence de 0,1 % à 1 %, de la masse totale de solides en équivalents calcinés d'un ou plusieurs

**14**

additif(s), de préférence organiques, facilitant la dispersion, le maintien en suspension, et éventuellement jusqu'à 5 % de la masse totale de solides en équivalents calcinés d'une source de silice liquide et/ou solide, de préférence représentant de 1 % à 5 % de la masse totale desdits solides, la quantité d'eau introduite étant telle que le résiduel sec de matières solides de la suspension après mise en température à 950 °C pendant 1 heure soit compris entre 40 % et 60 % ;

2/ mise en forme par atomisation de la suspension obtenue en 1/ pour produire des agglomérés sphériques dans un gaz chaud à une température d'entrée allant de 110°C et 300°C, de préférence allant de 130°C à 250°C, éventuellement suivie d'une étape de tamisage et/ou de cyclonage ;

3/ calcination des agglomérés obtenus en 2/ à une température allant de 500°C à 600°C, éventuellement précédée d'une phase de séchage post-atomisation ;

4/ éventuellement mise en contact du produit résultant de 3/ avec une solution aqueuse basique alcaline suivie d'un lavage ;

5/ éventuellement échange ionique partiel ou total des agglomérés zéolitiques obtenus en 3/ ou en 4/, suivi d'un lavage ;

6/ séchage et activation à une température allant de 200°C à 600°C du produit issu de l'étape 4/ ou 5/.

**7.** Procédé selon la revendication 6, dans lequel la ou les zéolite(s) mise(s) en oeuvre à l'étape 1/ sont sous forme de poudre(s) et présentent des tailles de cristaux mesurées au MEB comprises entre 0,5 $\mu$m et 20 $\mu$m, de préférence entre 0,5 $\mu$m et 10 $\mu$m.

**8.** Utilisation des agglomérés selon l'une quelconque des revendications 1 à 5, dans le domaine de la catalyse.

**9.** Utilisation des agglomérés selon l'une quelconque des revendications 1 à 5, dans des procédés de séparation des flux gazeux ou liquides, tels que les procédés d'adsorption modulés en pression en phase gazeuse, les procédés d'adsorption modulés en température en phase gazeuse ou liquide, les procédés d'adsorption en lit fixe sans régénération, les procédés de séparation en lits mobiles simulés, et de préférence dans des concentrateurs d'oxygène d'assistance respiratoire.

**10.** Concentrateur d'oxygène d'assistance respiratoire, transportable, mobile, de préférence portatif, comprenant au moins un aggloméré zéolitique selon l'une quelconque des revendications 1 à 5.

**Patentansprüche**

**1.** Zeolith-Agglomerate

• mit einem Gehalt an Zeolith(en) genau größer gleich 80 % und vorteilhafterweise größer gleich 90 Gewichts-% und die höchstens 20 % und vorteilhafterweise höchstens 10 % inertes Bindemittel enthalten, gerechnet als kalzinierte Äquivalente, wobei das inerte Bindemittel ein Tonmineral oder ein Tonmineralgemisch umfasst, vorzugsweise daraus besteht;
• mit einem mittleren Volumendurchmesser ($D_{50}$) zwischen 50 $\mu$m und 400 $\mu$m, bevorzugter zwischen 50 $\mu$m und 250 pm;
• mit einer Rohdichte zwischen 0,5 g/cm$^3$ und 0,8 g/cm$^3$ ;
• mit einer Druckfestigkeit im Bett (bulk crushing strength, BCS), gemessen entsprechend der Norm ASTM 7084-04, zwischen 0,5 MPa und 3 MPa, vorzugsweise zwischen 0,75 MPa und 2,5 MPa,
• mit einer mittleren Rundheit zwischen 85 % und 100 %, vorzugsweise zwischen 90 % und 100 %;
• mit einer derartigen Länglichkeit, dass der Prozentanteil von Teilchen mit einer Länglichkeit von 0 % von 10 bis 100 und vorzugsweise von 25 bis 100 reicht und der Prozentanteil von Teilchen mit einer Länglichkeit von unter 10 % von 70 bis 100 und vorzugsweise von 80 bis 100 reicht.

**2.** Zeolith-Agglomerate nach Anspruch 1, wobei der oder die Zeolith(e) ausgewählt ist bzw. sind aus Zeolithen A, Faujasiten, vorzugsweise Y, X, LSX, Chabasit und Clinoptilolit.

**3.** Zeolith-Agglomerate nach Anspruch 1 oder Anspruch 2, wobei das Bindemittel ein Tonmineral oder eine Tonmineralmischung umfasst und vorzugsweise daraus gebildet ist, ausgewählt aus Kaolinen, Kaoliniten, Nakriten, Dickiten, Halloysiten, Attapulgiten, Sepiolithen, Montmorilloniten, Bentoniten, Illiten und/oder Metakaolinen, vorzugsweise aus Kaolinen und Halloysiten.

**4.** Zeolith-Agglomerate nach einem der Ansprüche 1 bis 3, die einen mittleren Volumendurchmesser ($D_{50}$) zwischen 50 μm und 180 μm aufweisen.

**5.** Zeolith-Agglomerate nach einem der Ansprüche 1 bis 3, die einen mittleren Volumendurchmesser ($D_{50}$) zwischen 250 μm und 400 μm aufweisen.

**6.** Verfahren zur Herstellung von Agglomeraten nach einem der Ansprüche 1 bis 5, **dadurch gekennzeichnet, dass** es folgende Schritte umfasst:

1/ Mischen und Suspendieren in Wasser von Kristalliten von einem oder mehreren natürlichen oder synthetischen Zeolithen in Pulverform, mindestens einem Bindemittel auf Basis eines Tonminerals oder einer Tonmineralmischung, gegebenenfalls bis zu 5 %, vorzugsweise von 0,1 % bis 1 %, der Gesamtmasse an Feststoffen als kalzinierte Äquivalente von einem oder mehreren Zusatzstoff(en), vorzugsweise organisch, die das Dispergieren, das In-Suspension-Halten, erleichtern, und gegebenenfalls bis zu 5% der Gesamtmasse an Feststoffen als kalzinierte Äquivalente von einer flüssigen und/oder festen Siliciumdioxidquelle, die vorzugsweise 1 % bis 5 % der Gesamtmasse der Feststoffe ausmacht, wobei die eingeleitete Wassermenge derart ist, dass der Trockenrückstand an Feststoffen in der Suspension nach Erwärmung auf 950°C während 1 Stunde zwischen 40 % und 60 % liegt;

2/ Formen der in 1/ erhaltenen Suspension durch Zerstäubung zum Herstellen von kugelförmigen Agglomeraten in einem heißen Gas bei einer Eintrittstemperatur zwischen 110°C und 300 °C, vorzugsweise zwischen 130°C und 250 °C, gegebenenfalls gefolgt von einem Sieb- und/oder Fliehkraftabscheidungsschritt;

3/ Kalzinieren der in 2/ erhaltenen Agglomerate bei einer Temperatur zwischen 500°C und 600 °C, gegebenenfalls mit einer vorangehenden Trocknungsphase im Anschluss an die Zerstäubung;

4/ gegebenenfalls Kontaktieren des bei 3/ entstehenden Produkts mit einer alkalischen basischen wässrigen Lösung, gefolgt von einem Waschvorgang;

5/ gegebenenfalls teilweiser oder vollständiger Ionenaustausch bei den in 3/ oder in 4/ erhaltenen Zeolith-Agglomeraten, gefolgt von einem Waschvorgang;

6/ Trocknen und Aktivieren des Produkts aus Schritt 4/ oder 5/ bei einer Temperatur zwischen 200°C und 600 °C.

**7.** Verfahren nach Anspruch 6, wobei der oder die Zeolith(e), der bzw. die in Schritt 1/ eingesetzt wird bzw. werden, in Pulverform vorliegt bzw. vorliegen und eine per REM ermittelte Kristallgröße zwischen 0,5 μm und 20 pm, vorzugsweise zwischen 0,5 μm und 10 μm aufweist bzw. aufweisen.

**8.** Verwendung der Agglomerate nach einem der Ansprüche 1 bis 5 im Bereich der Katalyse.

**9.** Verwendung der Agglomerate nach einem der Ansprüche 1 bis 5 in Verfahren zum Trennen von Gas- oder Flüssigkeitsströmen, beispielsweise Verfahren zur Druckwechseladsorption in der Gasphase, Verfahren zur Temperaturwechseladsorption in der Gas- oder Flüssigphase, Adsorptionsverfahren im Festbett ohne Regeneration, Trennverfahren im simulierten Wanderbett und vorzugsweise in Sauerstoffkonzentratoren zur Beatmung.

**10.** Transportabler, beweglicher, vorzugsweise tragbarer Sauerstoffkonzentrator zur Beatmung, der mindestens ein Zeolith-Agglomerat nach einem der Ansprüche 1 bis 5 umfasst.

**Claims**

**1.** Zeolitic agglomerates

• having a content of zeolite (s) strictly greater than or equal to 80%, and advantageously greater than or equal to 90% by mass and containing at most 20%, and advantageously at most 10%, of inert binder, measured as calcined equivalent, said inert binder comprising, preferably consisting of, a clay or a mixture of clays;
• having a volume mean diameter ($D_{50}$) ranging from 50 μm to 400 μm, more preferably from 50 μm to 250 pm;
• having an apparent density ranging from 0.5 g/cm$^3$ to 0.8 g/cm$^3$;
• having a bulk crushing strength (BCS) measured according to the ASTM 7084-04 standard ranging from 0.5 MPa to 3 MPa, preferably ranging from 0.75 MPa to 2.5 MPa,
• having a mean roundness ranging from 85% to 100%, preferably from 90% to 100%;
• having an elongation such that the percentage of particles having an elongation of 0% ranges from 10 to 100 and preferably from 25 to 100, and the percentage of particles having an elongation of less than 10% ranges from 70 to 100 and preferably from 80 to 100.

2. Zeolitic agglomerate according to Claim 1, in which the zeolite (s) is (are) chosen from A zeolites, faujasites, preferably Y, X, LSX, chabazite and clinoptilolite.

3. Zeolitic agglomerates according to Claim 1 or Claim 2, in which the binder comprises, and preferably consists of, a clay or a mixture of clays chosen from kaolins, kaolinites, nacrites, dickites, halloysites, attapulgites, sepiolites, montmorillonites, bentonites, illites and/or metakaolins, more preferably from kaolins and halloysites.

4. Zeolitic agglomerates according to any one of Claims 1 to 3, having a volume mean diameter ($D_{50}$) of between 50 $\mu$m and 180 $\mu$m.

5. Zeolitic agglomerate according to any one of Claims 1 to 3, having a volume mean diameter ($D_{50}$) of between 250 $\mu$m and 400 $\mu$m.

6. Method for producing agglomerates according to any one of Claims 1 to 5, **characterized in that** it comprises the following steps:

1/ mixing and suspending in water crystallites of one or more powdered natural or synthetic zeolites, at least one binder based on a clay or a mixture of clays, optionally up to 5%, preferably from 0.1% to 1%, of the total mass of solids as calcined equivalent of one or more additives, preferably organic additives, facilitating the dispersion, the maintaining in suspension, and optionally up to 5% of the total mass of solids as calcined equivalent of a source of liquid and/or solid silica, preferably representing from 1% to 5% of the total mass of said solids, the quantity of water introduced being such that the dry residual matter of solids of the suspension after bringing to a temperature of 950°C for 1 hour is between 40% and 60%;
2/ forming by spray-drying the suspension obtained in 1/ in order to produce spherical agglomerates in a hot gas at an inlet temperature ranging from 110°C to 300°C, preferably ranging from 130°C to 250°C, optionally followed by a step of sieving and/or cycloning;
3/ calcining of the agglomerates obtained in 2/ at a temperature ranging from 500°C to 600°C, optionally preceded by a drying phase post-spray-drying;
4/ optionally bringing the product resulting from 3/ into contact with an alkaline basic aqueous solution followed by washing;
5/ optionally partial or complete ion exchange of the zeolitic agglomerates obtained in 3/ or in 4/ followed by washing;
6/ drying and activating at a temperature ranging from 200°C to 600°C of the product derived from step 4/ or 5/.

7. Process according to Claim 6, in which the zeolite (s) used in step 1/ are in powdered form and have crystal sizes, measured using SEM of between 0.5 $\mu$m and 20 $\mu$m, preferably between 0.5 $\mu$m and 10 $\mu$m.

8. Use of the agglomerates according to any one of Claims 1 to 5, in the field of catalysis.

9. Use of the agglomerates according to any one of Claims 1 to 5, in processes for separating gaseous or liquid streams, such as gaseous-phase pressure-modulated adsorption processes, gaseous- or liquid-phase temperature-modulated adsorption processes, fixed bed adsorption processes without regeneration, simulated fluidized bed separation processes, and preferably in oxygen concentrators for respiratory assistance.

10. Transportable, mobile, preferably portable oxygen concentrator for respiratory assistance, comprising at least one zeolitic agglomerate according to any one of Claims 1 to 5.

0 %

10 %

30 %

Figure 1

60 %

80 %

90 %

100 %

Figure 2

Figure 3a

Figure 3b

Figure 4

Figure 5

Figure 6a

Figure 6b

Figure 7

échantillon a/                              échantillon b/

<u>Figure 8a</u>

échantillon c/

échantillon d/

échantillon e/

Figure 8b

Figure 9

Figure 10

Figure 11

# RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6100211 A
- EP 0273736 A
- US 6524984 B
- GB 1124524 A
- JP 3799678 B
- EP 1215277 B1
- EP 1529833 A1
- WO 2000077140 A1
- WO 2000077141 A1
- US 4022714 A
- US 4357265 A
- EP 0112956 A1
- US 4826793 A
- GB 1145405 A
- US 4252688 A
- US 4542118 A
- US 5164073 A
- US 4612298 A
- GB 1256171 A
- US 5559067 A
- US 2004235642 A
- US 4520119 A
- GB 855301 A
- EP 0506282 B1
- FR 1505184
- US 3472617 A
- US 20060148642 A1
- US 5856264 A
- WO 199905063 A
- EP 1116691 A
- US 6464756 B
- EP 1223147 A

**Littérature non-brevet citée dans la description**

- **DE W. PIETSCH.** Size Enlargement By Agglomeration. John Wiley and Sons
- **K. MASTERS.** Spray Drying Handbook. Longman Scientific & Technical, 1991
- **R.T. YANG.** Gas séparation by adsorption processes. Butterworths, 1987, 201-235
- Characterization of Porous Solids and Powders : Surface Area, Pore Size and Density. **LOWELL.** Micropore Analysis. 143-145
- Morphométrie euclidienne des figures planes. Applications à l'analyse des matériaux granulaires. **E. PIRARD.** thèse de doctorat. Université de Liège, 1993, 253